# EUROPEAN PATENT SPECIFICATION

(11) **EP 2 093 962 B1**
(45) Date of publication and mention of the grant of the patent: **19.12.2012**
(21) Application number: 08800984.0
(22) Date of filing: 25.09.2008
(51) Int. Cl.: H04L 29/06

(54) **METHOD AND SYSTEM FOR CONTROLLING MEDIA STREAM IN REAL TIME**
VERFAHREN UND SYSTEM ZUR KONTROLLE VON MEDIASTRÖMEN IN ECHTZEIT
PROCÉDÉ ET SYSTÈME DE COMMANDE DE FLUX MULTIMÉDIA EN TEMPS RÉEL

(30) Priority: 30.09.2007 CN 200710151385
(43) Date of publication of application: 26.08.2009
(73) Proprietor: Huawei Technologies Co., Ltd., Shenzhen, Guangdong Province 518129 (CN)
(72) Inventor: LIN, Yangbo, Guangdong Province 518129 (CN)
(74) Representative: Pfenning, Meinig & Partner GbR
(86) International application number: PCT/CN2008/072511
(87) International publication number: WO 2009/046664

(56) References cited:
- EP-A1- 1 811 745
- WO-A1-2007/085691
- WO-A1-2007/096001
- CN-A- 1 750 571
- US-A1- 2004 125 757
- US-A1- 2006 116 150
- US-A1- 2007 060 042
- US-A1- 2007 213 078
- "3rd Generation Partnership Project; Technical Specification Group Core Network and Terminals; Multimedia Resource Function Controller (MRFC) â Multimedia Resource Function Processor (MRFP) Mp interface: Procedures Descriptions (Release 7)", 3GPP STANDARD; 3GPP TS 23.333, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. V7.2.0, 1 September 2007 (2007-09-01), pages 1-63, XP050363588,

## Description

### Field of the Invention

The present invention relates to a network communication technology, and in particular, to a media stream real-time control method and system.

### Background of the Invention

An IP multimedia subsystem (IMS) is a subsystem proposed by the Third Generation Partnership Project to support IP multimedia services. The IMS can provide multiple media services, with the control function separated from the bearer capability, calls separated from sessions, applications separated from services, services separated from networks, and mobile network services converged with Internet services. According to the network evolution idea of separation between services and bearers, a function entity that provides media resource services based on the IMS network architecture, for example, a media resource server, may be divided into two key function components: media resource function controller (MRFC) and media resource function processor (MRFP). The MRFC, which is located at the service control layer, is responsible for media deployment and/or control. The MRFP, which is located at the bearer transport layer, is responsible for media processing and/or delivery.

In a real-time media service, for example, an IP television service, when a user wants to watch a program, the user needs to send a resource allcoation request to the media resource server to process and transfer related media contents, such as creation, modification, deletion, integration, auditing and monitoring of media streams (including media codes, IP addresses and port numbers). In addition, the user may also need to exercise real-time interaction control over the media contents; for example, the user needs to control the play, stop, pause, resumption, fast forward, fast rewind, and recording of the media. In a current IMS-based network architecture, the MRFC can control the MRFP in managing the media resources, including creation, modification, deletion, integration, auditing and monitoring of media streams. However, the MRFC cannot control the MRFP in exercising interactive control over media resources, including play, stop, pause, resumption, fast forward, fast rewind, and recording of the media.

Thus, during the research of the present invention, the inventor finds at least the following problem in the prior art: In the technical solution of the prior art, the user cannot exercise real-time control over media resources in a network architecture where services are separated from bearers.
US 2007/0060042 A1 discloses a method for supporting an interactive broadcast service via IMS. In particular, it just disclose that the MRFC 30 controls the MRFP 20 to convert the data between the UE 10 and the broadcasting network 70 (D1, paragraph 0082), and the contents of conversion is a call setup and service request for receiving a broadcast service; or supplementary information except a multimedia stream.
US 2007/213078 A1 discloses a method for supporting multicast bearer services over an IP multimedia subsystem. In particular, it just disclose that the establishment, modification and termination of broadcast and multicast bearer services using IMS.
US 2006/116150 A1 relates a method for communication between an application server and media resource function processor. In particular, it discloses that the MRFP implements the media processing and switching function in according with a floor control policy, when a user wishes to speak; and the "floor" refers to the initiating caller which is initially granted the right to speak.

### Summary of the Invention

The objective of embodiments of the present invention is to provide a media stream real-time control method and system, a media resource function controller (MRFC), and a media resource function processor (MRFP), so that real-time control may be exercised over media resources in a network architecture where services are separated from bearers.

The objective of the embodiments is achieved through the following technical solution:

A media stream real-time control method provided in an embodiment of the present invention includes:
receiving, by an MRFC, media stream real-time control information from a user equipment (UE);
sending, by the MRFC, converted media stream real-time control information to an MRFP;
wherein the step of sending, by the MRFC, the converted media stream real-time control information to the MRFP comprises:
   parsing, by the MRFC, the media stream real-time control information, and differentiating resource allocation information and interactive operation related control information;
   converting, by the MRFC, the resource allocation information into media resource control information, and sending the media resource control information to the MRFP; and
   forwarding, by the MRFC, the interactive operation related control information to the MRFP; and
   exercising, by the MRFP, real-time control over media streams according to the media stream real-time control information
wherein the resource allocation information comprises creation, modification, deletion, integration, auditing and monitoring of media streams and any combination of parameters thereof, and the interactive operation related control information comprises play, stop, pause, resumption, fast forward, fast rewind, and recording of media streams and any combination of parameters thereof.

An MRFC provided in an embodiment of the present invention includes:
a receiving unit, adapted to receive media stream real-time control information from a UE; a parsing unit, adapted to parse the media stream real-time control information received by the receiving unit, and differentiate resource allocation information and interactive operation related control information; and
a sending unit, adapted to send the resource allocation information and the interactive operation related control information to the MRFP; wherein the resource allocation information comprises creation, modification, deletion, integration, auditing and monitoring of mediastreams and any combination of parameters thereof, and the interactive operation related control information comprises play, stop, pause, resumption, fast forward, fast rewind, and recording of media streams and any combination of parameters thereof.

A media stream real-time control system, comprises the MRFC and a MRFP, wherein
the MRFP, adapted to receive the media stream real-time control information that the MRFC sends and exercise real-time control over media streams according to the media stream real-time control information.
Further embodiments of the invention are defined by the dependent claims.

In the embodiments of the present invention, the MRFC directly forwards the media stream real-time control information sent from the UE to and sends the converted media stream real-time control information to the MRFP to control the MRFP in exercising real-time control over media streams. Thus, a user can exercise real-time control over media streams in a network architecture where services are separated from bearers.

### Brief Description of the Drawings

FIG. 1 is a signaling flowchart of a media stream real-time control method according to a first embodiment of the present invention;

FIG. 2 is a signaling flowchart of a media stream real-time control method according to a second embodiment of the present invention; and

FIG. 3 shows a structure of a media stream real-time control system according to an embodiment of the present invention.

### Detailed Description of the Embodiments

The embodiments of the present invention provide a media stream real-time control method and system, a media resource function controller (MRFC) and a media resource function processor (MRFP). For better understanding of the technical solution of the present invention, the following describes the present invention in detail with reference to the accompanying drawings and exemplary embodiments.

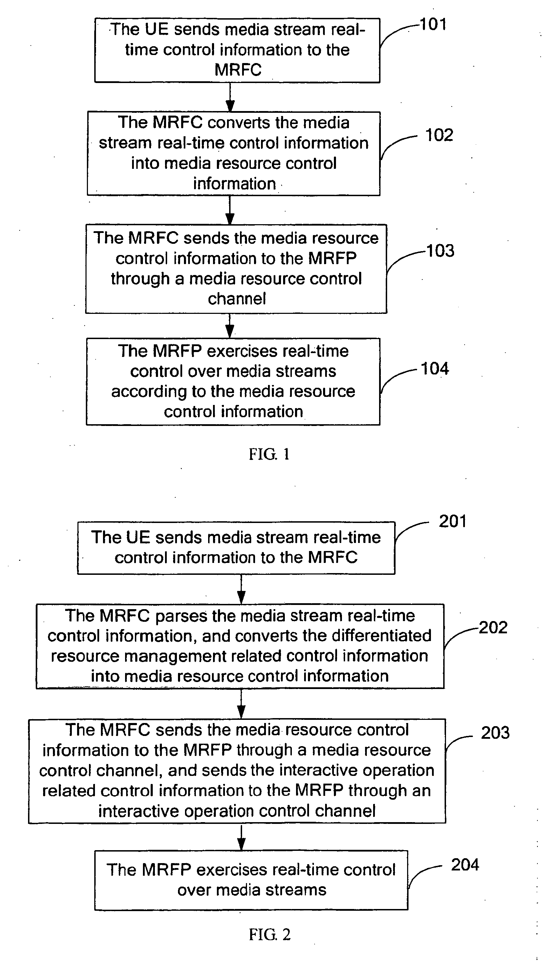

FIG. 1 is a signaling flowchart of a media stream real-time control method according to the first embodiment of the present invention. As shown in FIG. 1, a media real-time control channel is established between the UE and the MRFC to transfer media stream real-time control information, and a media resource control channel is established between the MRFC and the MRFP. The MRFC sends media resource control information to the MRFP through the media resource control channel, and the MRFP controls media streams according to the media resource control information. The media resource control channel may use a request-response mechanism.

The media stream real-time control process includes the following steps:

Step 101: The UE sends media stream real-time control information to the MRFC through a media real-time control channel.

The media real-time control channel is established between the UE and the MRFC, and used for the UE to transmit the media stream real-time control information to the MRFC. The whole media real-time control channel may be located at the service control layer, or bearer transport layer, or at both the service control layer and the bearer transport layer. To transmit the media stream real-time control information, the media real-time control channel may use the Real-Time Streaming Protocol (RTSP), the Session Initiation Protocol (SIP) or the RTSP encapsulated by the SIP.

The media stream real-time control information may include resource allcoation information, such as creation, modification, deletion, integration, auditing and monitoring of media streams and any combination of parameters thereof, and interactive operation related control information, such as play, stop, pause, resumption, fast forward, fast rewind and recording of media streams and any combination of parameters thereof.

Step 102: The MRFC converts the received media stream real-time control information into media resource control information.

The step of converting the received media stream real-time control information into media resource control information by the MRFC includes:

A. The MRFC parses the received media stream real-time control information, and differentiates resource allcoation information and/or interactive operation related control information;

B. The MRFC converts the resource allcoation information and/or interactive operation related control information into media resource control information

Step 103: The MRFC sends the media resource control information to the MRFP through a media resource control channel.

The media resource control channel is established between the MRFC and the MRFP for transferring the media resource control information, and may use the request-response mechanism. The media resource control channel may use a gateway control protocol, for example, the H.248.

Step 104: The MRFP exercises real-time control over media streams according to the received media resource control information.

The MRFP performs resource allocation on media streams according to the differentiated resource allcoation information, and performs an interactive operation on media streams according to the differentiated interactive operation related control information.

In this embodiment, the media resource control channel between the MRFC and the MRFP may be used to transmit other media resource control information besides media stream real-time control information, such as creation, modification, deletion, integration, auditing, and monitoring of media streams related to IP voice services, which is the same as the prior art and will not be further described.

In this embodiment, the media resource control channel is established between the MRFC and the MRFP to transmit media stream real-time control information and other media resource control information.

In addition, an interactive operation control channel may also be established between the MRFC and the MRFP to transmit media stream real-time control information and other media resource control information. The interactive operation control channel uses the RTSP or the RTSP encapsulated by the H.248. The MRFC forwards the received media stream real-time control information to the MRFP through the interactive operation control channel. Then, the MRFP exercises real-time control over media streams according to the received media stream real-time control information. The interactive operation control channel may be used to transmit other media resource control information besides media stream real-time control information.

FIG. 2 is a flowchart of a media stream real-time control method according to the second embodiment of the present invention. In this embodiment, a media real-time control channel is established between the UE and the MRFC to transmit media stream real-time control information, and a media resource control channel and an interactive operation control channel are established between the MRFC and the MRFP. The MRFC sends resource allcoation related control information to the MRFP through the media resource control channel, and sends interactive operation related control information to the MRFP through the interactive operation control channel.

The media resource real-time control process includes the following steps:

Step 201: The UE sends media stream real-time control information to the MRFC through a media real-time control channel.

The media real-time control channel is established between the UE and the MRFC, and is used by the UE for transmitting a media stream real-time control request to the MRFC. The whole media real-time control channel may be located at the service control layer, or bearer transport layer, or at both the service control layer and the bearer transport layer. To transmit media stream real-time control information, the media real-time control channel may use the RTSP, the SIP, or the RTSP encapsulated by the SIP.

The media stream real-time control information may include resource allcoation information, such as creation, modification, deletion, integration, auditing and monitoring of media streams and any combination of parameters thereof, and interactive operation related control information, such as play, stop, pause, resumption, fast forward, fast rewind and recording of media streams and any combination of parameters thereof.

Step 202: The MRFC parses the received media stream real-time control information, differentiates resource allcoation related control information and/or interactive operation related control information, and converts the resource allcoation related control information into media resource control information.

Step 203: The MRFC sends the converted media resource control information to the MRFP through a media resource control channel, and forwards the interactive operation related control information to the MRFP through an interactive operation control channel.

The media resource control channel is established between the MRFC and the MRFP to transmit the media resource control information which is obtained by converting the resource allcoation related control information, and may use the request-response mechanism. The media resource control channel may use a gateway control protocol, for example, the H.248.

The interactive operation control channel is established between the MRFC and the MRFP to transmit the interactive operation related control information in the media stream real-time control information, and may use the request-response mechanism. The interactive operation control channel uses the RTSP or RTSP encapsulated by the H.248.

Step 204: The MRFP exercises real-time control over media streams according to the received media stream real-time control information.

In this embodiment, the media resource control channel between the MRFC and the MRFP may be used to transmit other media resource control information besides media stream real-time control information, such as creation, modification, deletion, integration, auditing, and monitoring of media streams related to IP voice services, which is the same as the prior art and will not be further described.

In this embodiment, the media stream real-time control information and other media resource control information may be transmitted through mutual cooperation between two channels (including a media resource control channel and an interactive operation control channel) established between the MRFC and the MRFP.

In addition, the media stream real-time control information and other media resource control information may also be transmitted through either of the two channels (including a media resource control channel and an interactive operation control channel) established between the MRFC and the MRFP. The interactive operation control channel uses the RTSP or RTSP encapsulated by the H.248. The media resource control channel uses a gateway control protocol, for example, the H.248. The MRFC forwards the received media stream real-time control information to the MRFP through the interactive operation control channel, and the MRFP exercises real-time control over media streams according to the received media stream real-time control information; the MRFC sends other received media resource control information to the MRFP through the media resource control channel, and the MRFP controls media streams according to the received media resource control information.

It is understandable to those skilled in the art that all or part of the steps in the preceding embodiments may be implemented by hardware instructed by a program. The program may be stored in a computer readable storage medium such as a read-only memory (ROM), a random access memory (RAM), a magnetic disk or a compact disk (CD).

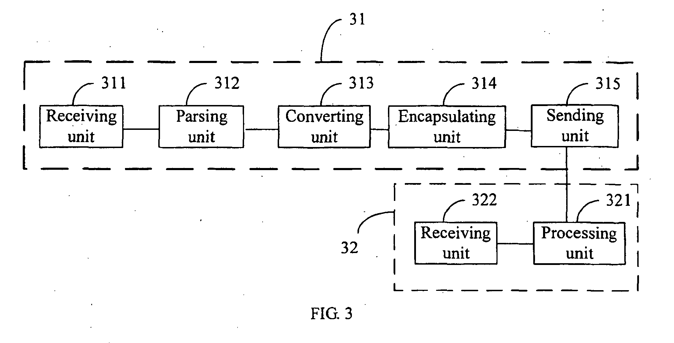

FIG. 3 shows a structure of a media stream real-time control system according to an embodiment of the present invention. The media stream real-time control system includes a media resource function controller (MRFC) 31 and a media resource function processor (MRFP) 32.

The MRFC 31 is adapted to: receive media stream real-time control information from a UE, and forward the media stream real-time control information directly to and/or send converted media stream real-time control information to the MRFP 32. The MRFP 32 is adapted to: receive the media stream real-time control information from the MRFC 31, and exercise real-time control over media streams according to the received media stream real-time control information.

The MRFC 31 includes a receiving unit 311, a parsing unit 312, a converting unit 313, an encapsulating unit 314, and a sending unit 315.

The receiving unit 311 is adapted to receive media stream real-time control information from the UE; the parsing unit 312 is adapted to: parse the media stream real-time control information received by the receiving unit 311, and differentiate resource allcoation related control information and/or interactive operation related control information; the converting unit 313 is adapted to convert the resource allcoation related control information obtained by the parsing unit 312 through parsing into media resource control information; the encapsulating unit 314 is adapted to encapsulate the media resource control information that the converting unit 313 obtains by converting the resource allcoation related control information, and/or the interactive operation related control information that the parsing unit 312 obtains through parsing over a gateway control protocol (for example, the H.248), or the RTSP; and the sending unit 315 is adapted to send the resource allcoation control information and/or interactive operation related control information encapsulated by the encapsulating unit to the MRFP 32.

The MRFC 31 may send the resource allcoation control information and/or interactive operation related control information to the MRFP 32 through a media resource control channel, which uses a media gateway control protocol.

The MRFC 31 may also send the resource allcoation control information and/or interactive operation related control information to the MRFP 32 through an interactive operation control channel, which uses RTSP or RTSP encapsulated by the media gateway control protocol.

The MRFC 31 may also send the resource allcoation control information to the MRFP 32 through the media resource control channel, and send the interactive operation related control information to the MRFP 32 through the interactive operation control channel. The media resource control channel uses a media gateway control protocol, and the interactive operation control channel uses the RTSP or RTSP encapsulated by the media gateway control protocol.

The MRFP 32 includes a receiving unit 321 and a processing unit 322. The receiving unit 321 is adapted to receive media stream real-time control information from the MRFC 31. The processing unit 322 is adapted to exercise real-time control over media streams according to the media stream real-time control information received by the receiving unit 321.

The MRFC may also include a receiving unit and a sending unit only. The receiving unit is adapted to receive media stream real-time control information from the UE. The sending unit is adapted to forward the media stream real-time control information received by the receiving unit to the MRFP. In addition, the MRFC may further include an encapsulating unit, adapted to encapsulate control information before being sent by the sending unit over a gateway control protocol (for example, the H.248) or the RTSP.

The MRFC may also include a receiving unit, a converting unit, and a sending unit only. The receiving unit is adapted to receive media stream real-time control information from the UE. The converting unit is adapted to: convert the media stream real-time control information received by the receiving unit into media resource control information, and send the media resource control information to the MRFP through the sending unit. In addition, the MRFC may further include an encapsulating unit, adapted to encapsulate control information before being sent by the sending unit over a gateway control protocol (for example, the H.248) or the RTSP.

According to the media stream real-time control method and system, MRFC, and MRFP provided in the embodiments of the present invention, the MRFC directly forwards the media stream real-time control information from the UE to and/or send the converted media stream real-time control information to the MRFP to control the MRFP in exercising real-time control over media streams. Thus, the real-time control on media streams may be implemented in a network architecture where services are separated from bearers.

Further, the MRFC receives the media stream real-time control information from the UE and controls the MRFP on a unified basis, and the MRFC is located at the service layer. Thus, the real-time control over media streams is exercised at the service layer, which simplifies the process of implementing functions of the MRFC and MRFP.

Detailed above are a media stream real-time control method and system provided by the present invention. The present invention is described through some exemplary embodiments, which are used for better understanding of the technical solution provided in the present invention. It is apparent that those skilled in the art can make various modifications and variations to the invention without departing from the scope of the invention. In conclusion, the contents of the specifications are not intended to limit the present invention.

## Claims

1. A media stream real-time control method, wherein the method comprises :
receiving, by a media resource function controller ,MRFC, media stream real-time control information from a user equipment, UE;
sending, by the MRFC, converted media stream real-time control information to a media resource function processor, MRFP;
wherein the step of sending, by the MRFC, the converted media stream real-time control information to the MRFP comprises:
parsing, by the MRFC, the media stream real-time control information, and differentiating resource allocation information and interactive operation related control information;
converting, by the MRFC, the resource allocation information into media resource control information, and sending the media resource control information to the MRFP; and
forwarding, by the MRFC, the interactive operation related control information to the MRFP; and exercising, by the MRFP, real-time control over media streams according to the media stream real-time control information;
wherein the resource allocation information comprises creation, modification, deletion, integration, auditing and monitoring of media streams and any combination of parameters thereof, and the interactive operation related control information comprises play, stop, pause, resumption, fast forward, fast rewind, and recording of media streams and any combination of parameters thereof.

2. The method according to claim 1, wherein the MRFC receives the media stream real-time control information from the UE through a media real-time control channel.

3. The method according to claim 2, wherein the media real-time control channel uses a Real-Time Streaming Protocol , RTSP, a Session Initiation Protocol , SIP, or RTSP encapsulated by SIP.

4. The method according to claim 1, wherein the MRFC sends the media resource control information to the MRFP through a media resource control channel.

5. The method according to claim 1, wherein the MRFC forwards the interactive operation related control information to the MRFP through an interactive operation control channel.

6. The method according to claim 1, wherein the step of sending, by the MRFC, the converted media stream real-time control information to the MRFP comprises:
by the MRFC, converting the media stream real-time control information into media resource control information, and sending the media resource control information to the MRFP.

7. The method according to claim 6, wherein the MRFC sends the media stream real-time control information to the MRFP through a media resource control channel.

8. The method according to claim 4 or 7, wherein the media resource control channel uses a gateway control protocol.

9. The method according to claim 5, wherein the interactive operation control channel uses a Real-Time Streaming Protocol ,RTSP or RTSP encapsulated by a gateway control protocol.

10. A media resource function controller, MRFC, wherein the MRFC comprises :
a receiving unit (311), adapted to receive media stream real-time control information from a user equipment, UE;
a parsing unit (312), adapted to parse the media stream real-time control information received by the receiving unit (311), and differentiate resource allocation information and interactive operation related control information; and
a sending unit (315), adapted to send the resource allocation information and the interactive operation related control information to a media resource function processor, MRFP ;
wherein the resource allocation information comprises creation, modification, deletion, integration, auditing and monitoring of media streams and any combination of parameters thereof, and the interactive operation related control information comprises play, stop, pause, resumption, fast forward, fast rewind, and recording of media streams and any combination of parameters thereof.

11. The media resource function controller according to claim 10, further comprising:
an encapsulating unit (314), adapted to encapsulate the media stream real-time control information sent by the sending unit (315) over a gateway control protocol or a Real-Time Streaming Protocol, RTSP.

12. A media stream real-time control system comprising a media resource function controller, MRFC, according to claim 10 or 11 and a media resource function processor, MRFP, wherein
the MRFP is adapted to receive the media stream real-time control information that the MRFC sends and to exercise real-time control over media streams according to the media stream real-time control information.

## Patentansprüche

1. Medienstrom-Echtzeit-Steuerverfahren, wobei das Verfahren Folgendes umfasst:
Empfangen von Medienstrom-Echtzeit-Steuerinformationen durch eine Medienressourcen-Funktionssteuerung, MRFC, von einem Benutzergerät, UE;
Senden von umgesetzten Medienstrom-Echtzeit-Steuerinformationen durch die MRFC zu einem Medienressourcen-Funktionsprozessor MRFP;
wobei der Schritt des Sendens der umgesetzten Medienstrom-Echtzeit-Steuerinformationen durch die MRFC zu dem MRFP Folgendes umfasst:
Analysieren der Medienstrom-Echtzeit-Steuerinformationen durch die MRFC und Unterscheiden von Ressourcenvergabeinformationen und interaktiven Betrieb betreffenden Steuerinformationen;
Umsetzen der Ressourcenvergabeinformationen durch die MRFC in Medienressourcen-Steuerinformationen und Senden der Medienressourcen-Steuerinformationen zu dem MRFP; und
Weiterleiten der interaktiven Betrieb betreffenden Steuerinformationen durch die MRFC zu dem MRFP; und Ausüben von Echtzeit-Steuerung durch den MRFP über Medienströme gemäß den Medienstrom-Echtzeit-Steuerinformationen;
wobei die Ressourcenvergabeinformationen Erzeugung, Modifikation, Löschung, Integration, Prüfung und Überwachung von Medienströmen und eine beliebige Kombination von Parametern davon umfassen und die interaktiven Betrieb betreffenden Steuerinformationen Wiedergabe, Stopp, Pause, Wiederaufnahme, schnelles Vorspulen, schnelles Rückspulen und Aufzeichnen von Medienströmen und eine beliebige Kombination von Parametern davon umfassen.

2. Verfahren nach Anspruch 1, wobei die MRFC die Medienstrom-Echtzeit-Steuerinformationen durch einen Medien-Echtzeit-Steuerkanal von dem UE empfängt.

3. Verfahren nach Anspruch 2, wobei der Medien-Echtzeit-Steuerkanal ein Real-Time Streaming Protocol, RTSP, ein Session Initiation Protocol, SIP, oder ein durch SIP eingekapseltes RTSP verwendet.

4. Verfahren nach Anspruch 1, wobei die MRFC die Medienressourcen-Steuerinformationen durch einen Medienressourcen-Steuerkanal zu dem MRFP sendet.

5. Verfahren nach Anspruch 1, wobei die MRFC die interaktiven Betrieb betreffenden Steuerinformationen durch einen Steuerkanal für interaktiven Betrieb zu dem MRFP weiterleitet.

6. Verfahren nach Anspruch 1, wobei der Schritt des Sendens der umgesetzten Medienstrom-Echtzeit-Steuerinformationen durch die MRFC zu dem MRFP Folgendes umfasst:
die MRFC setzt die Medienstrom-Echtzeit-Steuerinformationen in Medienressourcen-Steuerinformationen um und sendet die Medienressourcen-Steuerinformationen zu dem MRFP.

7. Verfahren nach Anspruch 6, wobei die MRFC die Medienstrom-Echtzeit-Steuerinformationen durch einen Medienressourcen-Steuerkanal zu dem MRFP sendet.

8. Verfahren nach Anspruch 4 oder 7, wobei der Medienressourcen-Steuerkanal ein Gateway-Steuerprotokoll verwendet.

9. Verfahren nach Anspruch 5, wobei der Steuerkanal für interaktiven Betrieb ein Real-Time Streaming Protocol, RTSP, oder ein durch ein Gateway-Steuerprotokoll eingekapseltes RTSP verwendet.

10. Medienressourcen-Funktionssteuerung, MRFC, wobei die MRFC Folgendes umfasst:
eine Empfangseinheit (311), die dafür ausgelegt ist, Medienstrom-Echtzeit-Steuerinformationen von einem Benutzergerät, UE, zu empfangen;
eine Analyseeinheit (312), die dafür ausgelegt ist, die durch die Empfangseinheit (311) empfangenen Medienstrom-Echtzeit-Steuerinformationen zu analysieren und Ressourcenvergabeinformationen und interaktiven Betrieb betreffende Steuerinformationen zu unterscheiden; und
eine Sendeeinheit (315), die dafür ausgelegt ist, die Ressourcenvergabeinformationen und die interaktiven Betrieb betreffenden Steuerinformationen zu einem Medienressourcen-Funktionsprozessor, MRFP, zu senden;
wobei die Ressourcenvergabeinformationen Erzeugung, Modifikation, Löschung, Integration, Prüfung und Überwachung von Medienströmen und eine beliebige Kombination von Parametern davon umfassen und die interaktiven Betrieb betreffenden Steuerinformationen Wiedergabe, Stopp, Pause, Wiederaufnahme, schnelles Vorspulen, schnelles Rückspulen und Aufzeichnen von Medienströmen und eine beliebige Kombination von Parametern davon umfassen.

11. Medienressourcen-Funktionssteuerung nach Anspruch 10, ferner umfassend:
eine Einkapselungseinheit (314), die dafür ausgelegt ist, die durch die Sendeeinheit (315) gesendeten Medienstrom-Echtzeit-Steuerinformationen über ein Gateway-Steuerprotokoll oder ein Real-Time Streaming Protocol RTSP einzukapseln.

12. Medienstrom-Echtzeit-Steuersystem, das eine Medienressourcen-Funktionssteuerung, MRFC, nach Anspruch 10 oder 11 und einen Medienressourcen-Funktionsprozessor, MRFP, umfasst, wobei
der MRFP dafür ausgelegt ist, die Medienstrom-Echtzeit-Steuerinformationen, die die MRFC sendet, zu empfangen, und Echtzeit-Steuerung über Medienströme gemäß den Medienstrom-Echtzeit-Steuerinformationen auszuüben.

## Revendications

1. Procédé de commande en temps réel de flux multimédia, lequel procédé comprend les étapes consistant à :
recevoir, par un contrôleur de fonction de ressources multimédia, MRFC, des informations de commande en temps réel de flux multimédia en provenance d'un équipement d'utilisateur, UE ;
envoyer, par le MRFC, des informations de commande en temps réel de flux multimédia converties à un processeur de fonction de ressources multimédia, MRFP ;
laquelle étape consistant à envoyer, par le MRFC, les informations de commande en temps réel de flux multimédia converties au MRFP comprend les étapes consistant à :
procéder au parsage, par le MRFC, des informations de commande en temps réel de flux multimédia et séparer des informations d'attribution de ressources et des informations de commande liées à des opérations interactives ;
convertir, par le MRFC, les informations d'attribution de ressources en informations de commande de ressources multimédia, et envoyer les informations de commande de ressources multimédia au MRFP ; et
retransmettre, par le MRFC, les informations de commande liées à des opérations interactives au MRFP ; et appliquer, par le MRFP, une commande en temps réel sur des flux multimédia en fonction des informations de commande en temps réel de flux multimédia ;
lesquelles informations d'attribution de ressources comprennent la création, la modification, le suppression, l'intégration, la vérification et la surveillance de flux multimédia et toute combinaison de paramètres de ceux-ci, et lesquelles informations de commande liées à des opérations interactives comprennent la lecture, l'arrêt, la pause, la reprise de lecture, l'avance rapide, le retour rapide et l'enregistrement de flux multimédia et toute combinaison de paramètres de ceux-ci.

2. Procédé selon la revendication 1, dans lequel le MRFC reçoit les informations de commande en temps réel de flux multimédia en provenance de l'UE par un canal de commande en temps réel de multimédia.

3. Procédé selon la revendication 2, dans lequel le canal de commande en temps réel de multimédia utilise un protocole de diffusion en flux continu en temps réel, RTSP, un protocole d'ouverture de session, SIP, ou un RTSP encapsulé par un SIP.

4. Procédé selon la revendication 1, dans lequel le MRFC envoie les informations de commande de ressources multimédia au MRFP par un canal de commande de ressources multimédia.

5. Procédé selon la revendication 1, dans lequel le MRFC retransmet les informations de commande liées à des opérations interactives au MRFP par un canal de commande d'opérations interactives.

6. Procédé selon la revendication 1, dans lequel l'étape consistant à envoyer, par le MRFC, les informations de commande en temps réel de flux multimédia converties au MRFP comprend l'étape consistant à :
convertir, par le MRFC, les informations de commande en temps réel de flux multimédia en informations de commande de ressources multimédia, et envoyer les informations de commande de ressources multimédia au MRFP.

7. Procédé selon la revendication 6, dans lequel le MRFC envoie les informations de commande en temps réel de flux multimédia au MRFP par un canal de commande de ressources multimédia.

8. Procédé selon la revendication 4 ou 7, dans lequel le canal de commande de ressources multimédia utilise un protocole de commande de passerelle.

9. Procédé selon la revendication 5, dans lequel le canal de commande d'opérations interactives utilise un protocole de diffusion en flux continu en temps réel, RTSP, ou un RTSP encapsulé par un protocole de commande de passerelle.

10. Contrôleur de fonction de ressources multimédia, MRFC, lequel MRFC comprend :
une unité de réception (311), conçue pour recevoir des informations de commande en temps réel de flux multimédia en provenance d'un équipement d'utilisateur, UE ;
une unité de parsage (312), conçue pour procéder au parsage des informations de commande en temps réel de flux multimédia reçues par l'unité de réception (311), et séparer des informations d'attribution de ressources et des informations de commande liées à des opérations interactives ; et
une unité d'envoi (315), conçue pour envoyer les informations d'attribution de ressources et les informations de commande liées à des opérations interactives à un processeur de fonction de ressources multimédia, MRFP ;
lesquelles informations d'attribution de ressources comprennent la création, la modification, le suppression, l'intégration, la vérification et la surveillance de flux multimédia et toute combinaison de paramètres de ceux-ci, et lesquelles informations de commande liées à des opérations interactives comprennent la lecture, l'arrêt, la pause, la reprise de lecture, l'avance rapide, le retour rapide et l'enregistrement de flux multimédia et toute combinaison de paramètres de ceux-ci.

11. Contrôleur de fonction de ressources multimédia selon la revendication 10, comprenant en outre :
une unité d'encapsulage (314), conçue pour encapsuler les informations de commande en temps réel de flux multimédia envoyées par l'unité d'envoi (315) sur un protocole de commande de passerelle ou un protocole de diffusion en flux continu en temps réel, RTSP.

12. Système de commande en temps réel de flux multimédia, comprenant un contrôleur de fonction de ressources multimédia, MRFC, selon la revendication 10 ou 11 et un processeur de fonction de ressources multimédia, MRFP,
lequel MRFP est conçu pour recevoir les informations de commande en temps réel de flux multimédia envoyées par le MRFC et pour appliquer une commande en temps réel sur des flux multimédia en fonction des informations de commande en temps réel de flux multimédia.
